# EUROPÄISCHE PATENTSCHRIFT

(11) **EP 0 953 483 B1**
(45) Veröffentlichungstag und Bekanntmachung des Hinweises auf die Patenterteilung: **10.09.2008**
(21) Anmeldenummer: 99108226.4
(22) Anmeldetag: 27.04.1999
(51) Int. Cl.: B60R 21/20, B60R 21/237

(54) **Airbag, insbesondere Beifahrerairbag**
Airbag, in particular passenger airbag
Coussin gonflable, en particulier pour côté passager

(30) Priorität: 29.04.1998 DE 19819206
(43) Veröffentlichungstag der Anmeldung: 03.11.1999
(73) Patentinhaber: KEY SAFETY SYSTEMS, INC., Sterling Heights, MI 48314 (US)
(72) Erfinder: Specht, Martin, 82340 Feldafing (DE)
(74) Vertreter: Nöth, Heinz

(56) Entgegenhaltungen:
- EP-A- 0 812 741
- DE-A- 4 343 026
- GB-A- 2 314 298
- US-A- 5 425 551
- US-A- 5 605 350

## Beschreibung

Die Erfindung betrifft einen Airbag nach dem Oberbegriff des Patentanspruches 1.

Ein derartiger aus US-A-5,425,551 bekannter Airbag weist einen Gassack gemäß dem Oberbegriff des Anspruchs 1 auf, der doppelt mit sich überkreuzenden Faltungen gefaltet ist. Die erste Faltung kann Fächer- oder Harmonika-Form aufweisen und die zweite Faltung kann als Rollfaltung oder Zick-Zack-Faltung ausgebildet sein. Das Gassackgewebe ist zur Fixierung in einem Gehäuse um eine rohrförmige Fülleinrichtung geschlungen. Die beiden Stapel der ersten und zweiten Faltung sind zwischen der Fülleinrichtung und einem Gassackoberteil, das die umliegende Fläche des gefalteten Gassackes bildet, angeordnet.

Ferner ist aus EP-A-0 812 741 eine Airbagvorrichtung bekannt, bei welcher die jeweilige beim Aufblasvorgang im Bereich des Füllvolumens des Gassackes vorhandene Situation an der Beifahrerseite im Fahrzeuginnenraum berücksichtigt wird. Hierbei wird dem Umstand Rechnung getragen, dass innerhalb eines sehr kurzen Zeitraumes in das Gaskissen ein großes Füllvolumen von über 1001, z.B. 1301, in einer mittleren Füllzeit von ca. 35ms eingeblasen wird. Bei der bekannten Airbagvorrichtung wird der Gassack so lange befüllt, bis während des Vorschubs ein Gegenstand den Vorschub behindert. Der Vorschub kann dabei mit Hilfe einer Vorschubabtasteinrichtung, welche im Innern des Gassacks vorgesehen ist, überwacht werden.

Aufgabe der Erfindung ist es, einen Airbag der eingangs genannten Art zu schaffen, bei welchem ein kompaktes, gefaltetes Gassackpaket, welches sich beim Aufblasen rasch entfaltet, vorgesehen ist.

Diese Aufgabe wird durch die Merkmale des Patentanspruches 1 gelöst.

Die Anordnung und die Bemessung der Faltschläge der beiden sich überkreuzenden Faltungen ist derart, dass im Innern des Gassackes ein Frei-raum geschaffen wird bzw. geschaffen werden kann, durch welchen bevorzugt geradlinig verlaufende Abtastelemente bzw. Meßelemente, die ein Maß für den Vorschub des Airbags bei seiner Entfaltung abgeben, bis an das die Vorderseite bzw. Oberseite des gefalteten Gassackpakets geführt werden können.

Geeignet für die Abtastung bzw. Messung der Vorschublänge sind beim Entfalten des Gaskissens mitbewegte geradlinig verlaufende längliche Meßelemente, beispielsweise Meßfäden, Meßbänder oder andere geeignete Zugmittel, an denen die Bewegung der Gassackvorderfront in den Fahrgastraum hinein abgetastet bzw. gemessen werden kann. Eine Vorrichtung zur Auswertung des insbesondere ungehinderten Vorschubs des Gassacks ist aus der DE 196 11 384 A1 bekannt oder in der DE 197 07 997 A1 beschrieben. Beispielsweise kann eine Impulsfolge erzeugt werden, die abhängt von der Vorschubbewegung des sich entfaltenden Gassacks. Hierzu kann ein Meß- bzw. Abtastelement oder es können mehrere Meß- bzw. Abtastelemente mit der Vorderfront des Gassackes verbunden sein.

Aufgrund der speziellen Faltung wird ferner gewährleistet, daß beim Aufblasen der Gassack aus seinem gefalteten Zustand rasch entfaltet wird und im wesentlichen die Umriß gestalt annimmt, welche durch sein mit der Fixiereinrichtung verbundenes Unterteil und sein die Vorderfront aufweisendes Oberteil, vorgegeben ist. Unterteil und Oberteil sind durch eine rundumlaufende Naht miteinander verbunden

Durch die Faltung läßt sich ein kompaktes Gassackpaket erzielen, welches im Grundriß etwa den Abmessungen der Fixiereinrichtung entspricht. Die Fixiereinrichtung ist als Fixierrahmen ausgebildet sein, der die Einblasöffnung für das Füllgas in das Innere des Gassackes umgibt. Das gefaltete Gassackpaket kann auch mit einem Aufnahmefach, welches gegebenenfalls mit einer Verstärkungswanne ausgestattet ist (DE 197 04 684 A1), angeordnet sein. Durch die Fixiereinrichtung wird der Gassack mit dem Fahrzeugaufbau verbunden.

Durch die erste Faltung des Gassackes wird ein Balgen gebildet, bei dem an zwei Seiten des Gassackes Faltschläge aufeinander zugerichtet sind. Die Faltschläge werden jeweils von zwei in einer innenliegenden Faltlinie zusammenlaufenden Faltflügeln gebildet. Die zweite Faltung ist eine Zick-Zack-Faltung, bei welcher der bei der ersten Faltung gebildete Balgen mit aufeinanderliegenden Faltflügeln in Zick-Zack-Form gefaltet wird. Die zweite Faltung endet an der seitlichen Begrenzung der Fixiereinrichtung.

Der sich bei der zweiten Faltung ergebende Faltstapel des Gassackes wird zwischen dem Fixierrahmen, und der oben liegenden Fläche des gefalteten Gassackes angeordnet. Ein die oben liegende Fläche des gefalteten Gassackes bildendes Gewebestück ist Teil des Gassackoberteils und befindet sich in der Vorderfront des sich in den Fahrgastraum beim Aufblasen bewegenden Gassackes. Da die zweite Faltung an den seitlichen Begrenzungen der Fixiereinrichtung oder in der Nähe davon endet, verbleibt ein Gassackbereich mit einer etwa der Grundfläche der Fixiereinrichtung entsprechenden Ausdehnung, welcher nur die erste Faltung aufweist. Dieser Gassackbereich liegt unmittelbar unterhalb des die oben liegende Fläche bildenden Gewebestückes und oberhalb des zweifach gefalteten Stapels. Die Verankerung der Abtast- bzw. Meßelemente, insbesondere Meßfäden, an der Vorderfront des Gassackes hängt von der Gestalt des Gassackes, welche in Abhängigkeit vom Fahrzeutyp vorbestimmt ist, ab. Die Verankerung erfolgt in der Weise, daß Körperteile eines Fahrzeuginsassen, insbesondere wenn sich dieser in Out-Of-Position befindet, oder Gegenstände erfaßt werden können und die Füllung des Gassackes dementsprechend gesteuert wird, wie es in der DE 196 11 384 A1 oder der DE 197 04 684 A1 beschrieben ist.

Ferner können die verschiedenen Faltschläge des gefalteten Gassackes durch Reißnähte, insbesondere im Bereich ihrer Faltlinien, verbunden sein, um ein gezieltes Entfaltungsverhalten beim Aufblasen des Gassackes zu erzielen.

Anhand der Figuren wird an Ausführungsbeispielen die Erfindung noch näher erläutert.
Es zeigt:
- Fig. 1:: in der Darstellung (A) eine Draufsicht auf einen entfalteten Gassack eines Airbags mit strichliert und strichpunktiert eingezeichneten Faltlinien und in der Darstellung (B) in Seitenansicht;
- Fig. 2:: in schematischer Darstellung eine erste Faltung zur Herstellung eines gefalteten Gassackes;
- Fig. 3:: in der Darstellung (A) einen Ausgangszustand der zweiten Faltung, welche senkrecht zu der in der Fig. 2 dargestellten ersten Faltung verläuft, in der Darstellung (B) die zweite Faltung in einem Zwischenstadium und in der Darstellung (C) die beendete zweite Faltung mit fertiggestelltem Faltstapel des Gassackes;
- Fig. 4:: die gleichen Darstellungen (A), (B) und (C) wie in Fig. 3 bei einem anderen Ausführungsbeispiel;
- Fig. 5:: schematisch verschiedene Entfaltungszustände beim Aufblasen des Gassackes mit eingezeichneten Abtast- bzw. Meßelementen zur Ermittlung des Vorschubs, insbesondere der Vorderfront des Gassackes; und
- Fig. 6:: in den Darstellungen (A) bis (D) verschiedene Entfaltungszustände des Gassackes beim Aufblasen.

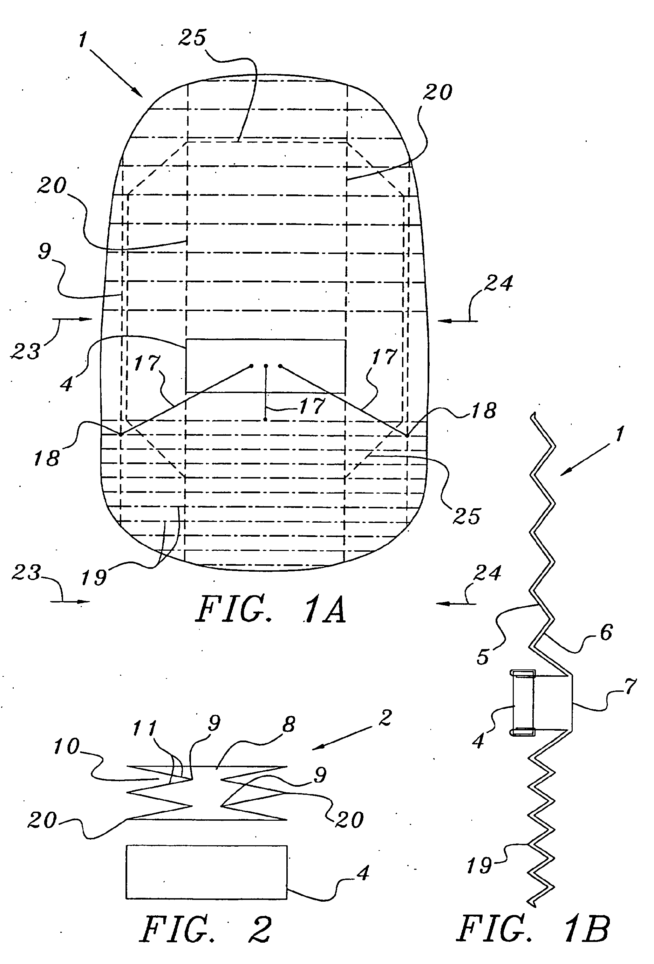

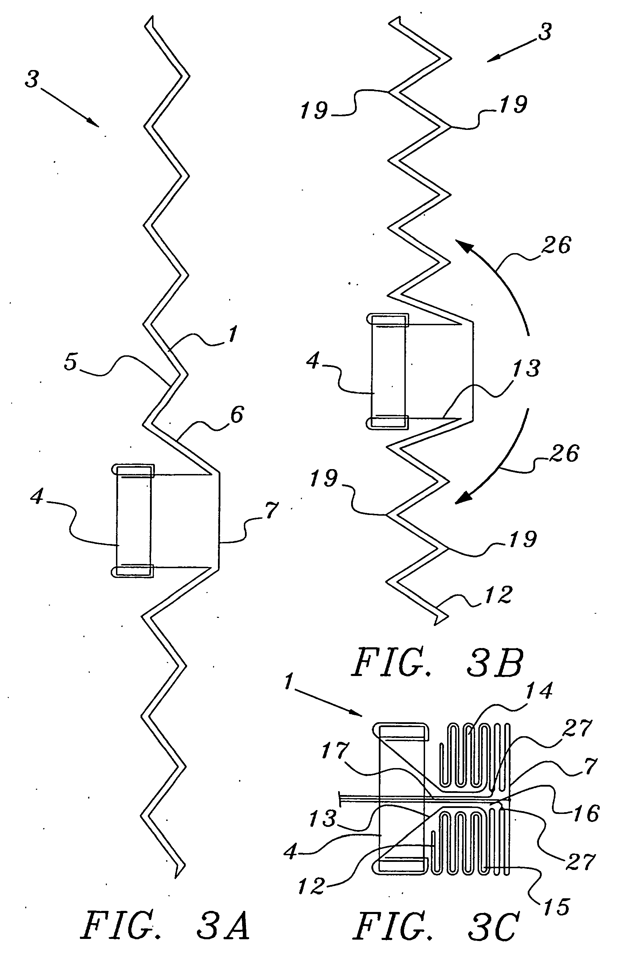

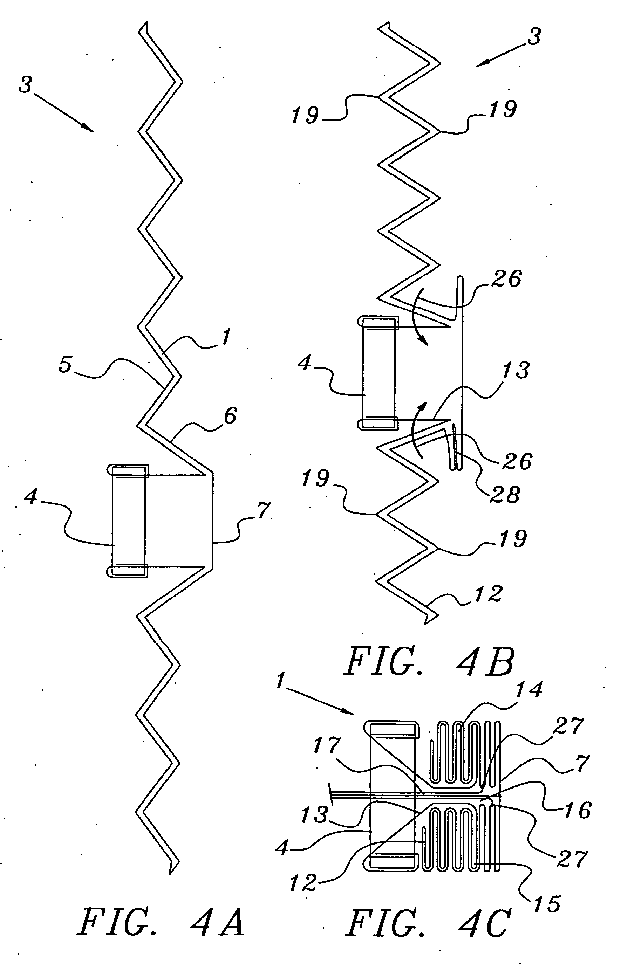

In der Fig. 1 (A) ist in Draufsicht ein Gassack 1 dargestellt wie er beispielsweise für einen Beifahrerairbag zum Einsatz kommt. In der Darstellung (B) ist die Seitenansicht des Gassackes 1 dargestellt, wobei Faltschläge einer zweiten Faltung 3, welche anhand der Fig. 3 und 4 noch erläutert wird, angedeutet sind. Faltlinien 19 der zweiten Faltung 3 sind in der Darstellung (A) in strichpunktierter Form dargestellt. In strichlierter Form sind senkrecht dazu verlaufende Faltlinien 9 und 20 einer ersten Faltung 2 (Fig. 2) dargestellt. Die Faltlinien 9 bilden innenliegende Faltlinien und die Faltlinien 20 bilden äußere Faltlinien der ersten Faltung 2 wie im einzelnen aus der Fig. 2 zu ersehen ist. Der Gassack 1 besteht aus einem Gassackunterteil 5, welches mit einer als Fixierrahmen 4 ausgebildeten Fixiereinrichtung verbunden ist, sowie einem Gassackoberteil 6, welches im wesentlichen die Vorderfront des Gassackes 1 bei der Entfaltung in den Fahrgastraum hin darstellt. Durch eine umlaufende Naht können Gassackoberteil und -unterteil miteinander verbunden sein.

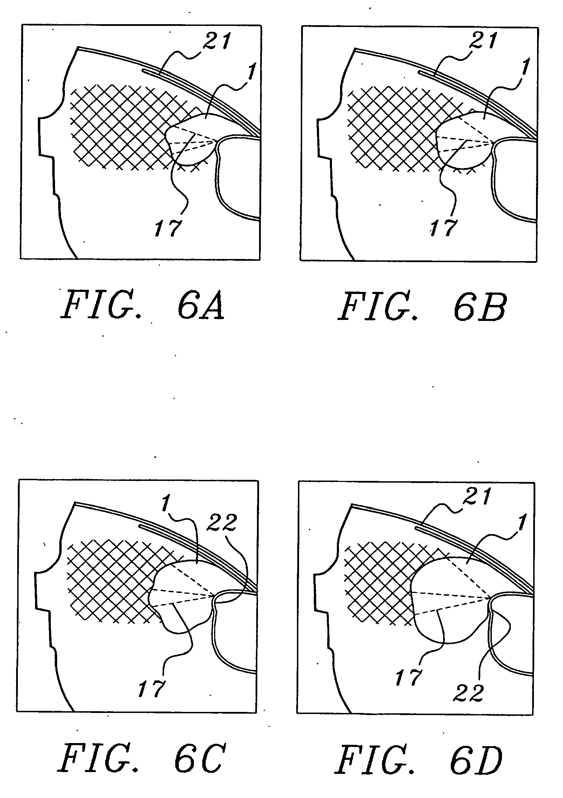

Der in den Figuren dargestellte Gassack ist ein Ausführungsbeispiel, welches für einen Beifahrerairbag geeignet ist. Ein in den Figuren oberhalb des Fixierrahmens 4 gezeigter Airbagbereich befindet sich im ausgeblasenen Zustand (Fig. 6) zwischen Armaturenbrett 22 und einer Frontscheibe 21 des Kraftfahrzeugs und stützt sich an der Frontscheibe 21 ab. Der in den Figuren unterhalb des Fixierrahmens 4 dargestellte Bereich des Gassakkes erstreckt sich im aufgeblasenen Zustand etwa vor dem Armaturenbrett 22 des Kraftfahrzeugs. Beim dargestellten Ausführungsbeispiel besitzt der obere Bereich des Gassackes 1, welcher zwischen dem Armaturenbrett 22 und der Frontscheibe 21 sich im aufgeblasenen Zustand befindet, ein größeres Füllvolumen als der untere Bereich.

Im gefalteten Zustand (Fig. 3 (C) und 4 (C)) ist der Gassack 1 mit den beiden sich überkreuzenden Faltungen 2 und 3 gefaltet. Die erste Faltung 2 ist in der Fig. 2 schematisch dargestellt. Durch diese Faltung wird ein Balgen 8 gebildet. Die Faltung erfolgt in den Fig. 1 (A) und 2 von rechts und von links in Richtung der aufeinanderzuweisenden Pfeile 23 und 24. Diese Faltrichtungen (Pfeile 23 und 24) verlaufen quer zur vertikalen Ausdehnung des Gassackes 1 bezogen auf seine Anordnung im Kraftfahrzeug. Die erste Faltung 2 beinhaltet Faltschläge 10, welche zwei zusammenlaufende Faltflügel 11 aufweist. Die Faltflügel 11 laufen in innenliegenden Faltlinien 9 zusammen und gehen von äußeren Faltlinien 20 aus. Die Faltschläge 10 sind entsprechend den entgegengesetzten Faltrichtungen (Pfeile 23 und 24) aufeinander zu gerichtet. Beim dargestellten Ausführungsbeispiel sind die Faltschläge 10 der ersten Faltung 2 so bemessen, daß die äußeren Faltlinien 20 etwa mit den Außenkanten des Fixierrahmens 4 fluchten wie dies schematisch in der Fig. 2 gezeigt ist.

Der auf diese Weise in Form eines Balgens 8 geformte Gassack 1 wird mit der zweiten senkrecht dazu verlaufenden Faltung 3 versehen. Die Faltung 3 besitzt, wie insbesondere aus den Fig. 3 und 4 zu ersehen ist, Zick-Zack-Form. Die zweite Faltung 3 wird dem zum Balgen 8 gefalteten Gassack 1 aufgeprägt. Dabei werden die zwischen den Faltlinien 19 der zweiten Faltung 3 gebildeten Faltschläge aufeinandergelegt, und zwischen dem Fixierrahmen 4 und einem Gewebestück 7, welches die oben- bzw. außenliegenden Fläche des gefalteten Gassackes 1 bildet, angeordnet (Fig. 3 (C) und 3 (C)). Hierzu werden die aufeinandergelegten Schläge der zweiten Faltung in Richtung von einwärts weisenden Pfeilen 26 eingedreht (Fig. 3 (B) und 4 (C)). Wie insbesondere aus den Darstellungen der Fig. 3 (A) und (B) und Fig. 4 (A) und (B) zu ersehen ist, erfolgt die Zick-Zack-Faltung 3 von oben nach unten, soweit es den oberen Teil des Gassackes 1 betrifft, und von unten nach oben, soweit es unteren Bereich des Gassackes 1 betrifft. Die Faltung ist hierbei auf den Fixierrahmen 4 zu gerichtet.

Aus der obigen Darstellung wird ersichtlich, daß die erste Faltung 2 auf die beiden Enden des Fixierrahmens 4 zugerichtet ist und die zweite Faltung 3 auf die beiden Längsseiten des Fixierrahmens 4 zugerichtet ist. Beim dargestellten Ausführungsbeispiel weist der gefaltete Gassack im Grundriß etwa die Abmessungen des Fixierrahmens 4 auf. Um die aufeinandergestapelten Faltschläge der zweiten Faltung 3 zwischen dem außenliegenden Gewebestück 7 und dem Fixierrahmen 4 unterzubringen, ist die Schlaglänge des unmittelbar mit dem Fixierrahmen 4 verbundenen inneren Faltschlages 13 der zweiten Faltung etwa gleich der oder etwas größer als die Stapelhöhe der restlichen Faltschläge der zweiten Faltung 3. Dies ergibt sich insbesondere aus der Darstellung des gefalteten Stapels des Gassackes in den Darstellungen der Fig. 3 (C) und 4 (C). Bei dieser Anordnung werden die gefalteten Stapel 14, 15 der zweiten zwischen jeweils zwei Faltlinien 19 der zweiten Faltung gebildeten Faltschläge in Richtung der Pfeile 26 so eingedreht, daß der äußere Faltschlag 12 der zweiten Faltung auf dem Fixierrahmen 4 abgestützt ist.

Der Fixierrahmen 4 kann die Einblasöffnung zum Befüllen des Gassackes umfassen. Das Füllgas wird von einem nicht dargestellten Gasgenerator, gegebenenfalls über einen Diffusor durch die Öffnung des Fixierrahmens 4 in das Innere des gefalteten Gassackes 1 eingeleitet. Aufgrund der speziellen Faltung gewinnt man ein kompaktes Stapelpaket des Gassackes 1, welches beim Aufblasen sich rasch entfaltet und die gewünschte endgültige Form zur Erzielung der geforderten Rückhaltefunktion insbesondere auf der Beifahrerseite des Kraftfahrzeugs erreicht wird.

Bei einer flachen Anordnung des gefalteten Gassackpakets, wie es beispielsweise bei einem im Armaturenbrett integrierten Airbag erwünscht ist, können die gestapelten Faltschläge der beiden gekreuzten Faltungen das gesamte zur Verfügung stehende Aufnahmefach gegebenenfalls mit Verstärkungswanne (DE 197 04 684 A1) ausfüllen.

Aufgrund der unterschiedlichen Längen der oberen und unteren Bereiche des Gassakkes 1 können die Schlaglängen zwischen den Faltlinien 19 und/oder die Anzahl der Faltschläge in diesen Bereichen unterschiedlich gewählt werden, um gleichmäßige Stapelhöhen der Faltstapel 14 und 15 (Fig. 3 (C) und 4 (C)) im Faltstapel des Gassackes zu erhalten. Wie aus der Fig. 4 (B) hervorgeht, kann ein zusätzlicher Faltschlag 28 unmittelbar unterhalb dem Gewebestück 7, welches die obenliegende Fläche des fertigen Gassackstapels bildet, zusätzlich eingeformt sein, um eine verbesserte Verankerungs- oder Anbindungsmöglichkeit für die Abtast- bzw. Meßelemente 17 zu erhalten.

Da die zweite Faltung 3 an den seitlichen Begrenzungen der Fixiereinrichtung 4 oder in der Nähe davon endet, wie aus den Darstellungen der Figuren 3 (B) und 4 (B) sich ergibt, verbleibt ein Gassackbereich mit einer etwa der Grundfläche der Fixiereinrichtung 4 entsprechenden Ausdehnung, in welchem die zweite Faltung nicht eingeformt wird. Dieser Gassackbereich besitzt nur die erste Faltung in Form eines Balgen. Wie insbesondere aus den Figuren 3 (C) und 4 (C) zu entnehmen ist, befindet sich dieser Gassackbereich, der nur die erste Faltung 2 aufweist, oberhalb der Gassackstapel 14 und 15, welche beide Faltungen 2 und 3 aufweisen. Die oberste Lage des nur mit der ersten Faltung 2 versehenen Gassackbereiches wird von dem Gewebestück 7 gebildet. Die Anbindung bzw. Verankerung der Abtast- bzw. Meßelemente 17 erfolgt in Verankerungsstellen 27, die bevorzugt in diesem nur die erste Faltung aufweisenden Gassackbereich liegen.

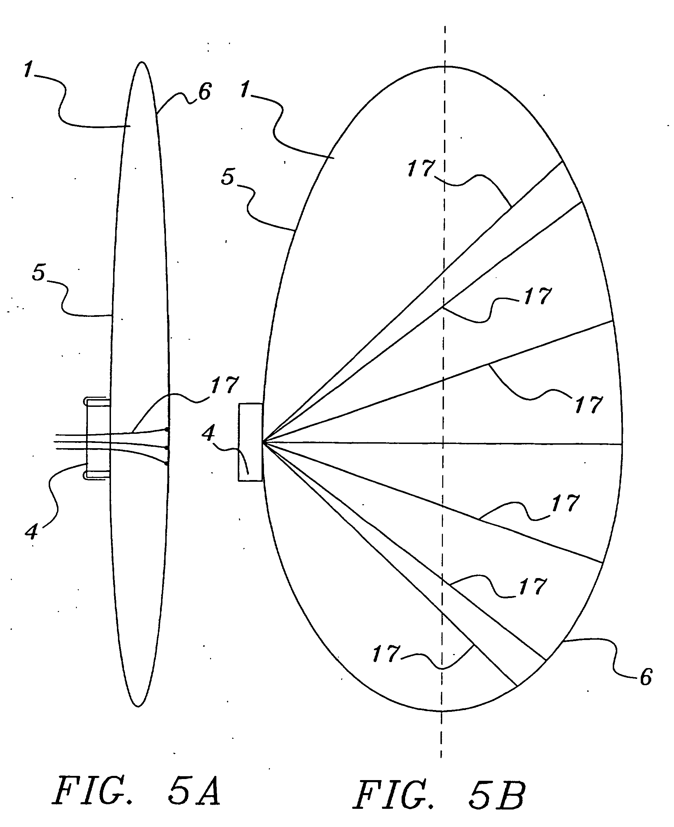

Durch die spezielle Falttechnik wird ein Durchgang für ein oder mehrere Abtast- bzw. Meßelemente 17 im Innern des Gassackstapels geschaffen, wie aus den Fig. 3 (C) und 4 (C) zu ersehen ist. Die Abtast- bzw. Meßelemente 17 können von ihren Verankerungspunkten 27 an der Gassackinnenseite geradlinig und unbehindert zu einer Abtast- bzw. Meßstelle geführt werden. Die Meßstelle ist in den Figuren nicht näher dargestellt und kann an geeigneter Stelle angeordnet sein und beispielsweise so ausgebildet sein und in der Weise arbeiten, wie es aus der DE 196 11 384 A1 bekannt ist. Aufgrund der unbehinderten, insbesondere geradlinigen Führung des Meßelementes bzw. der Meßelemente 17 von der Abtast- bzw. Meßstelle zu den Verankerungspunkten 27 erreicht man eine genaue Information über die Vorschublänge des sich entfaltenden Gassackes 1. Die Verankerungspunkte 27 sind bevorzugt an den innenliegenden Faltlinien 9 der ersten Faltung 2 vorgesehen und können an Kreuzungspunkten mit den Faltlinien 19 der zweiten Faltung 3 oder an der innenliegenden Faltlinie des zusätzlichen Faltschlages 28 vorgesehen sein. Die Lage der Verankerungspunkte ist so gewählt, daß bestimmte Bereiche der Vorderfront des sich in den Fahrgastraum bewegenden Gassackes bei seiner Entfaltung im Hinblick auf unbehinderten Vorschub überwacht werden können. Hierzu kann beispielsweise eine Meßanordnung und Auswerteeinrichtung vorgesehen sein, wie sie aus der DE 196 11 384 A1 bekannt ist. Wie aus den Fig. 5 und 6 zu ersehen ist, ergibt sich beim Übergang von der gestapelten Form in die sich entfaltende Form des Gassackes während des Aufblasens eine Meßanordnung mit Hilfe von beispielsweise geradlinig verlaufenden Meßelementen, die biegsam sein können und unter einer bestimmten Zugwirkung stehen für die Vorschublänge des sich entfaltenden Gassackes 1 in den jeweils gewünschten zu überwachenden Bereichen, die bevorzugt an der Vorderfront des Gassackes liegen. In den Darstellungen (A) bis (D) der Fig. 6 ist der zeitliche Ablauf des Entfaltungsvorganges schematisch dargestellt. Aus diesen Darstellungen und den Darstellungen (A) und (B) der Fig. 5 ergibt sich, daß mit Hilfe einfacher faden- oder bandförmiger Meßelemente oder ähnlicher Meßelemente eine exakte und durch die Faltung des Gassackes unbehinderte Erfassung der Vorschublänge erreicht wird. Die spezielle Faltung erlaubt eine schlaufenfreie Führung der Meßelemente 17 innerhalb des Gassackstapels, wie insbesondere aus den Fig. 3 (C) und 4 (C) zu ersehen ist. Je nach Airbagausführung in Abhängigkeit von den verschiedenen Fahrzeugtypen können die Verankerungspunkte 27, welche die Meßpunkte der Vorschublänge darstellen, gewählt werden. Hierdurch können vor allem Out-Off-Positionen des Beifahrers erfaßt werden und die Gasfüllung entsprechend gesteuert werden, wie es beispielsweise aus der DE 196 11 384 A1 bekannt ist oder in der DE 197 04 684 A1 beschrieben ist.

Ferner können, wie es in der Fig. 1 schematisch dargestellt ist, Reißnähte 25 vorgesehen sein, welche in Abhängigkeit von den verschiedenen Airbagtypen in unterschiedlichen Fahrzeugen und von dem gewünschten Entfaltungsverhalten entlang bestimmter Faltlinien 9 und 19 gelegt werden können.

## Patentansprüche

1. Airbag, insbesondere Beifahrerairbag, welcher einen im Ruhezustand gefalteten Gassack aufweist, der an einer Fixiereinrichtung (4) befestigt ist, wobei der Gassack (1) doppelt mit sich überkreuzenden Faltungen (2, 3) gefaltet ist und die beiden sich überkreuzenden Faltungen (2, 3) mit ihren Faltschlägen (10, 19 - 19) im wesentlichen senkrecht zueinander ausgerichtet sind, wobei durch die erste Faltung (2) ein Balgen (8) gebildet ist und die zweite Faltung (3) als Zick-Zack-Faltung ausgebildet ist, wobei zwei nach der zweiten Faltung (3) sich ergebende Stapel (14, 15) als Gassackunterteil (5) zwischen der Fixiereinrichtung (4) und einem Gassackoberteil (6) mit einem die oben liegende Fläche des gefalteten Gassackes (1) bildenden Gewebestück (7) angeordnet sind, und wobei das Gassackoberteil (6) am sich entfaltenden Gassack im wesentlichen die Vorderfront bildet,
**dadurch gekennzeichnet, dass** die Fixiereinrichtung (4) als Fixierrahmen mit rechteckiger Form ausgebildet ist und eine Füllöffnung umfasst, durch welche der Gassack beim Entfalten aufgeblasen wird, dass die zweite Faltung (3) an den oder in der Nähe der seitlichen Begrenzungen der Fixiereinrichtung (4) endet und das der dazwischenliegende Gassackbereich mit einer etwa dem Grundriß der Fixiereinrichtung (4) entsprechenden Ausdehnung nur die erste Faltung (2) aufweist und im gefalteten Gassackstapel zwischen den beiden die beiden Faltungen (2, 3) aufweisenden Faltstapeln (14, 15) und dem die Oberseite bildenden Gewebestück (7) angeordnet ist.

2. Airbag nach Anspruch 1, **dadurch gekennzeichnet, daß** der Grundriß des gefalteten Gassackes (1) etwa die Abmessungen der Fixiereinrichtung (4) aufweist.

3. Airbag nach Anspruch 1 oder 2, **dadurch gekennzeichnet, daß** im doppelt gefalteten Zustand ein etwa im Grundriß den Abmessungen der Fixiereinrichtung (4) entsprechendes Gewebestück (7) des Gassackoberteils (6) die obenliegende Fläche des gefalteten Gassackpakets bildet.

4. Airbag nach einem der Ansprüche 1 bis 3, **dadurch gekennzeichnet, daß** die erste Faltung (2) an den beiden Enden der länglich ausgebildeten Fixiereinrichtung (4) und die zweite Faltung (3) auf die beiden Längsseiten der Fixiereinrichtung (4) zu gerichtet ist.

5. Airbag nach einem der Ansprüche 1 bis 4, **dadurch gekennzeichnet, daß** jeweils äußere Faltschläge (12) der zweiten Faltung (3) auf die Fixiereinrichtung (4) als untere Lage des jeweiligen Faltstapels (14, 15) der zweiten Faltung (3) aufliegen.

6. Airbag nach einem der Ansprüche 1 bis 5, **dadurch gekennzeichnet, daß** die Anzahl und/oder die Faltschläglängen der beiden Faltstapel (14, 15) unterschiedlich sind.

7. Airbag nach einem der Ansprüche 1 bis 6, **dadurch gekennzeichnet, daß** zwischen den beiden Faltstapeln (14, 15) der zweiten Faltung (3) und den Faltschlägen (10) der ersten Faltung (2) ein unmittelbarer Durchgang (16) aus der Ebene der Fixiereinrichtung (4) zum Gewebestück (7), welches die obenliegende Fläche des gefalteten Gassackes (1) bildet, und/oder zu Verankerungspunkten (27) an einer beim Aufblasen des Gassackes gebildeten Vorderfront des sich entfaltenden Gassackes für wenigstens ein die Vorschublänge bei der Gassackentfaltung erfassendes, insbesondere geradlinig verlaufendes Meßelement (17) herstellbar ist.

8. Airbag nach einem der Ansprüche 1 bis 7, **dadurch gekennzeichnet, daß** das wenigstens eine Meßelement (17) mit dem Gassackoberteil (6) verbunden ist.

9. Airbag nach einem der Ansprüche 1 bis 8, **dadurch gekennzeichnet, daß** der Verankerungspunkt (27) des jeweiligen Meßelements (17) mit dem Gassackoberteil (6) an einer innenliegenden Faltlinie (9, 19) der ersten und/oder zweiten Faltung (2, 3) liegt.

10. Airbag nach einem der Ansprüche 1 bis 9, **dadurch gekennzeichnet, daß** die Verankerungspunkte an Faltenkreuzungspunkten (18) der Faltlinien der ersten und zweiten Faltung liegen.

11. Airbag nach einem der Ansprüche 1 bis 10, **dadurch gekennzeichnet, daß** wenigstens ein Meßelement (17) mit dem Gewebestück (7), welches die obenliegende Fläche des gefalteten Gassackes (1) bildet, verbunden ist.

12. Airbag nach einem der Ansprüche 1 bis 11, **dadurch gekennzeichnet, daß** für ein gezieltes Entfaltungsverhalten beim Aufblasen des Gassackes (1) die Faltschläge der beiden Faltungen (2, 3) durch Reißnähte (25), insbesondere im Bereich der Faltlinien verbunden sind.

13. Airbag nach Anspruch 1, **dadurch gekennzeichnet, daß** die Anbindung bzw. Verankerung der jeweiligen Meßelemente (17) in dem nur die erste Faltung (2) aufweisenden Gassackbereich erfolgt.

## Claims

1. An airbag, in particular a passenger airbag, which comprises a gas sack which is folded when non-operative, which gas sack is fastened to a fixing means (4), the gas sack (1) being doubly folded with crossing sets of folds (2, 3) and the two crossing sets of folds (2, 3) being oriented with their fold lays (10, 19-19) substantially perpendicular to one another, the first set of folds (2) forming bellows (8) and the second set of folds (3) taking the form of a zigzag fold, two stacks (14, 15) obtained after provision of the second set of folds (3) being arranged as a gas sack lower part (5) between the fixing means (4) and a gas sack upper part (6) with a woven fabric part (7) forming the upper surface of the folded gas sack (1), and the gas sack upper part (6) substantially forming the front face when the gas sack deploys, **characterised in that** the fixing means (4) takes the form of a fixing frame rectangular in shape and comprises a filling orifice, through which the gas sack is inflated on deployment, **in that** the second set of folds (3) ends at or in the vicinity of the lateral boundaries of the fixing means (4) and **in that** the gas sack region therebetween, extending approximately in accordance with the plan of the fixing means (4), comprises only the first set of folds (2) and is arranged in the folded gas sack stack between the two fold stacks (14, 15) comprising the two sets of folds (2, 3) and the woven fabric piece (7) forming the top.

2. An airbag according to claim 1, **characterised in that** the plan of the folded gas sack (1) has approximately the dimensions of the fixing means (4).

3. An airbag according to claim 1 or claim 2, **characterised in that**, in the doubly folded state, a woven fabric piece (7) of the gas sack upper part (6) corresponding in plan approximately to the dimensions of the fixing means (4) forms the upper surface of the folded gas sack package.

4. An airbag according to any one of claims I to 3, **characterised in that** the first set of folds (2) is directed at the two ends of the elongate fixing means (4) and the second set of folds (3) is directed towards the two longitudinal sides of the fixing means (4).

5. An airbag according to any one of claims 1 to 4, **characterised in that** in each case outer fold lays (12) of the second set of folds (3) lie on the fixing means (4) as a bottom layer of the respective fold stack (14, 15) of the second set of folds (3).

6. An airbag according to any one of claims I to 5, **characterised in that** the number and/or fold lay lengths of the two fold stacks (14, 15) are different.

7. An airbag according to any one of claims 1 to 6, **characterised in that** between the two fold stacks (14, 15) of the second set of folds (3) and the fold lays (10) of the first set of folds (2) a direct passage (16) may be produced from the plane of the fixing means (4) to the woven fabric piece (7), which forms the upper surface of the folded gas sack (1), and/or to anchoring points (27) at a front face, formed upon inflation of the gas sack, of the deploying gas sack for at least one, in particular linearly extending measuring element (17) detecting length of advance upon gas sack deployment.

8. An airbag according to any one of claims 1 to 7, **characterised in that** the at least one measuring element (17) is connected to the gas sack upper part (6).

9. An airbag according to any one of claims I to 8, **characterised in that** the anchoring point (27) anchoring the respective measuring element (17) to the gas sack upper part (6) is located at an internal fold line (9, 19) of the first and/or second set of folds (2, 3).

10. An airbag according to any one of claims 1 to 9, **characterised in that** the anchoring points lie at fold crossing points (18) of the fold lines of the first and second sets of folds.

11. An airbag according to any one of claims I to 10, **characterised in that** at least one measuring element (17) is connected to the woven fabric piece (7), which forms the upper surface of the folded gas sack (1).

12. An airbag according to any one of claims I to 11, **characterised in that** the fold lays of the two sets of folds (2, 3) are connected by tear seams (25), in particular in the area of the fold lines, for purposeful deployment behaviour on inflation of the gas sack (1).

13. An airbag according to claim 1, **characterised in that** connection or anchoring of the respective measuring elements (17) takes place in the gas sack region comprising only the first set of folds (2).

## Revendications

1. Coussin gonflable, notamment coussin gonflable pour passager, comprenant un sac à gaz plié à l'état de repos qui est fixé sur un dispositif de fixation (4), le sac à gaz (1) faisant l'objet d'un double pliage avec des pliages (2, 3) qui se croisent et les deux pliages croisés (2, 3) étant orientés de manière essentiellement perpendiculaire l'un par rapport à l'autre avec leurs plis formés (10, 19 - 19), un soufflet (8) étant formé par le premier pliage (2) et le second pliage (3) étant exécuté en tant que pliage en zig-zag, deux empilements (14, 15) obtenus suite au second pliage (3) étant situés en tant que partie inférieure de sac à gaz (5) entre le dispositif de fixation (4) et une partie supérieure de sac à gaz (6) pourvue d'une pièce de tissu (7) formant la surface de dessus du sac à gaz (1) plié et la partie supérieure de sac à gaz (6) formant essentiellement la face avant sur le sac à gaz se dépliant, **caractérisé par le fait que** le dispositif de fixation (4) est exécuté en tant que cadre de fixation de forme rectangulaire et comprend une ouverture de remplissage à travers laquelle le sac à gaz est gonflé pour le dépliage, **par le fait que** le second pliage (3) se termine au niveau ou à proximité des limites latérales du dispositif de fixation (4) et que la zone de sac à gaz intermédiaire, dont l'étendue correspond à peu près à la projection horizontale du dispositif de fixation (4), présente uniquement le premier pliage (2) et est située, dans l'empilement du sac à gaz plié, entre les deux empilements de plis (14, 15) présentant les deux pliages (2, 3) et la pièce de tissu (7) formant le côté supérieur.

2. Coussin gonflable selon la revendication 1, **caractérisé par le fait que** la projection horizontale du sac à gaz (1) plié possède à peu près les dimensions du dispositif de fixation (4).

3. Coussin gonflable selon la revendication 1 ou 2, **caractérisé par le fait que**, dans l'état doublement plié, une pièce de tissu (7) de la partie supérieure de sac à gaz (6) dont la projection horizontale correspond à peu près aux dimensions du dispositif de fixation (4) forme la surface de dessus du paquet formé par le sac à gaz plié.

4. Coussin gonflable selon l'une des revendications 1 à 3, **caractérisé par le fait que** le premier pliage (2) est dirigé vers les deux extrémités du dispositif de fixation (4) d'exécution allongé et le second pliage (3) est dirigé vers les deux côtés longitudinaux du dispositif de fixation (4).

5. Coussin gonflable selon l'une des revendications 1 à 4, **caractérisé par le fait que** des plis formés extérieurs (12) du second pliage (3) reposent à chaque fois sur le dispositif de fixation (4) en tant que couche inférieure de l'empilement de plis respectif (14, 15) du second pliage (3).

6. Coussin gonflable selon l'une des revendications 1 à 5, **caractérisé par le fait que** le nombre et/ou la longueur des plis formés des deux empilements de plis (14, 15) sont différents.

7. Coussin gonflable selon l'une des revendications 1 à 6, **caractérisé par le fait qu'**il est possible de former, entre les deux empilements de plis (14, 15) du second pliage (3) et les plis formés (10) du premier pliage (2), un passage direct (16) du plan du dispositif de fixation (4) vers la pièce de tissu (7) formant la surface de dessus du sac à gaz (1) plié et/ou vers des points d'ancrage (27) au niveau d'une face avant du sac à gaz se dépliant formée lors du gonflage du sac à gaz pour au moins un élément de mesure (17) s'étendant notamment de manière rectiligne qui mesure la longueur d'avance lors du dépliage du sac à gaz.

8. Coussin gonflable selon l'une des revendications 1 à 7, **caractérisé par le fait que** le au moins un élément de mesure (17) est relié à la partie supérieure de sac à gaz (6).

9. Coussin gonflable selon l'une des revendications 1 à 8, **caractérisé par le fait que** le point d'ancrage (27) de l'élément de mesure respectif (17) avec la partie supérieure de sac à gaz (6) est situé sur une ligne de pliage intérieure (9, 19) du premier et/ou second pliage (2, 3).

10. Coussin gonflable selon l'une des revendications 1 à 9, **caractérisé par le fait que** les points d'ancrage sont situés sur des points d'intersection de pliage (18) des lignes de pliage du premier et du second pliage.

11. Coussin gonflable selon l'une des revendications 1 à 10, **caractérisé par le fait qu'**au moins un élément de mesure (17) est relié à la pièce de tissu (7) qui forme la surface de dessus du sac à gaz (1) plié.

12. Coussin gonflable selon l'une des revendications 1 à 11, **caractérisé par le fait que**, pour un comportement de dépliage ciblé lors du gonflage du sac à gaz (1), les plis formés des deux pliages (2, 3) sont reliés par des coutures déchirables (25), notamment dans la zone des lignes de pliage.

13. Coussin gonflable selon la revendication 1, **caractérisé par le fait que** la liaison resp. l'ancrage des éléments de mesure respectifs (17) est réalisé(e) dans la zone du sac à gaz présentant uniquement le premier pliage (2).
